# EUROPEAN PATENT APPLICATION

(11) **EP 2 164 026 A1**
(43) Date of publication of application: **17.03.2010**
(21) Application number: 08290865.8
(22) Date of filing: 15.09.2008
(51) Int. Cl.: G06K 9/00, G06F 3/01

(54) **Gesture service platform**

(71) Applicant: Alcatel Lucent, 75008 Paris (FR)
(72) Inventor: Moreels, Johan Marie Camiel, 1760 Roosdaal-Strijtem (BE); Dobbelaere, Philippe, 2520 Broechem (BE)
(74) Representative: Vandenbroeck, Josiane Anne Marie

(57) **Abstract**

A gesture service platform is disclosed which is being coupled to a plurality of motion sensor device (S1,S2,..,Sn), and being adapted to receive raw sensor data (d1,d2,...,dn) from any of said motion sensor devices (S1,S2,...,Sn), to store said raw sensor data (d1,d2,...,dn) and to provide any of said raw sensor data to any of a plurality of applications (A1,A2,...,Am) coupled to said gesture service platform.

## Description

The present invention relates to a service platform enabling the use of movements or gestures by applications.

For applications such as games, programs related to revalidation of patients, follow-up of sportsmen, etc. the recent trend is to record movements specific for each application, which are then either directly analyzed online, such as in games, or off-line such as for movement monitoring. The existing systems are thereby closed complete packages that contain both the sensing hardware as well as the applications software including the specific instructions for handling the input movement data. Such closed systems however show severe limitations: first of all they do not allow adding additional functionality without intervention of the developer of the system unless some specific development kit is provided. Such a development kit however ties the developer to the private system of the vendor of the solution. Another drawback relates to the lack of possibilities to mix and match such a system with other sensor components and other applications of the same or of different vendors. Still another drawback relates to the fact that many systems in the area of revalidation or sports only provide offline feedback making instantaneous corrective actions with respect to the user of these applications more difficult.

An object of the present invention is therefore to provide a system to overcome the drawbacks related to the existing solutions.

According to the invention, this object is achieved by the provision of a gesture service platform as an independent service platform which can be used by application developers as well as by motion sensor device vendors. In its most simple form such a gesture server allows to store data from several movement sources such as accelerometers, 3D stereo imaging systems etc. The recorded data can immediately be consumed by applications or value added services, or may be stored for a certain time until retrieval by these applications. By the introduction of a gesture service platform, vendors of devices containing motion sensors are thus offered a platform that allows them to upload the data of their devices to this platform. Similarly applications requiring input gesture data can retrieve such data from this platform, by means of the presence of a dedicated interface to this gesture service platform as stated in claim 10.

Another characteristic feature of the present invention is set out in claim 2.

The gesture service platform thereby does not only provide an independent storage and retrieval service for any type of gestures but also offers a service for processing the raw sensor data, for instance by analyzing and identifying gestures out of the raw movement data. Not only information on basic gestures can thereby be provided but also higher-level movement information, such as for example walking, running, waiving or even bulk movements of a crowd can be obtained by the processing, for further storage on the gesture service platform, enabling further use by applications. In this way developers that use the gesture service in their applications can not only use the raw sensor data but also base their logic on the high level movement abstraction data or primitives derived from the raw data by the gesture server. This allows them to concentrate on the added value logic of their application and not on the manipulation of the sensor data.

The specific processing can be on request of one or more applications, as set out in 3, and can even be controlled by an application, via the provision, by this application, of specific instructions related to the processing of the raw sensor data to the gesture service platform, as set out in claim 4.

The gesture service platform can be coupled via a direct link to some motion sensor devices, and/or may be coupled via a communications network to others. A distributed network connection environment between the motion sensors on one hand and the gesture service platform on the other hand is possible. A similar configuration is possible between the applications and the gesture service platform. The gesture service platform may itself be distributed amongst several physical servers, or being concentrated on one physical processing platform.

Other characteristic features of the present invention are set out in the appended claims.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Fig. 1 shows a high level view of a gesture service platform within a network environment example with respect to applications and sensors,
Fig. 2 shows a detailed embodiment of a gesture server and
Fig. 3 shows the embodiment of Fig. 2 for an application related to real-time car monitoring.

The following merely illustrates the principles of the invention. It will thus be appreciated that those skilled in the art will be able to devise various arrangements that, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

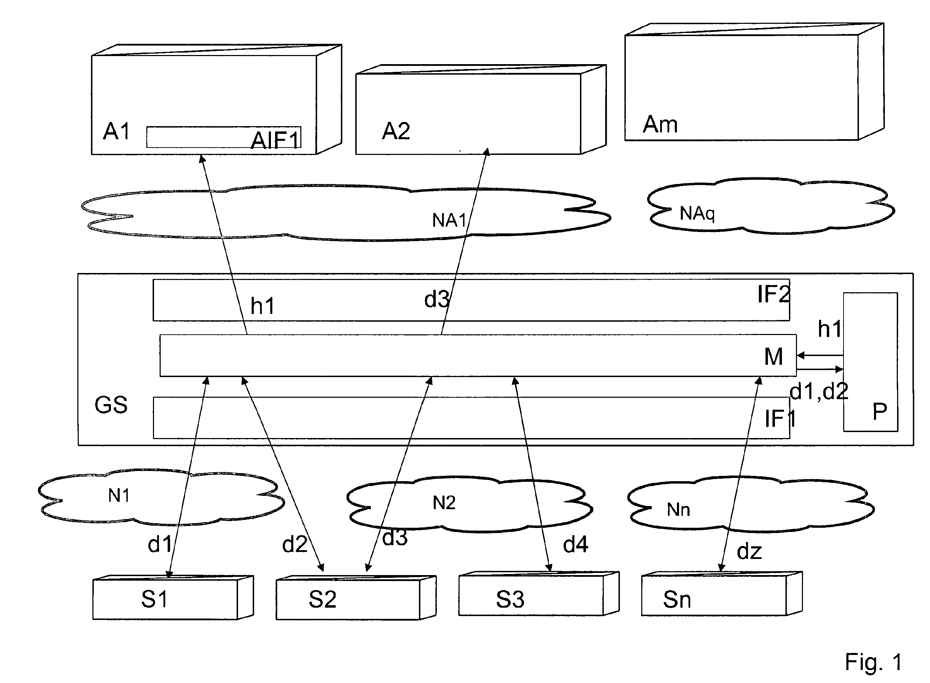

Fig. 1 shows a high-level architecture of a gesture service platform GS, being coupled on one hand to a first plurality of motion sensor devices, and on the other hand to a second plurality of applications.

In Fig. 1 the gesture service platform is shown as one block, which can be run on one server, and which can be accordingly also be denoted as gesture server, but such a platform may also be physically distributed amongst several computer servers as is well known by a person skilled in the art.

In this figure the motion sensor devices are denoted by the blocks S1, S2, S3 to Sn. The raw data they generate are denoted by d1, d2 , d3 to dz, as some sensor devices will simultaneously generate more than one sensor output, e.g. an accelerometer can generate acceleration data in one or more dimensions, and imaging system can upload velocity and/or acceleration data extracted from its raw dimensional data.

In some embodiments the motion sensor devices are directly coupled to the gesture service platform GS, in other embodiments they provide their raw data via a communications network such as a computer network, a car network, a telecommunications network, or a combination of such networks, to the gesture service platform. These networks can be shared between some motion sensors, or can be a separate one. In Figure 1 a situation is depicted wherein motion sensor S1 is coupled to the gesture service platform via a communications network N1, motion sensor devices S2 and S3 both share a network N2 to the gesture service platform and motion sensor device Sn is coupled to GS via network Nn.

The plurality of applications which are able to communicate with the gesture server are denoted on Fig. 1 as A1, A2 to Am. In some embodiments they are directly linked to the gesture server or gesture service platform. However in other embodiments they are coupled to the gesture server via one or more communications network, which can be the same, but can also be a different one, from the communications network between the gesture server and the sensor devices. It is also possible that each application is coupled to the gesture server via a separate network, or that some applications share a same network, different from that of others. Fig. 1 depicts a situation wherein applications A1 and A2 share a network NA1 to the gesture service platform, and where application Am is coupled to GS via communication network NAq .

The gesture service platform of Fig. 1 further shows two interfaces : a first one IF1 , being a interface for communication with all types of motion sensors , and a second one IF2, being a predefined, preferably standardized interface for communication with all types of applications. The applications therefore also need to be equipped with a corresponding interface, able to communicate with the applications-side standardized interface of the gesture service platform.

The first interface is adapted to receive any type of motion sensor data, and to provide this to a storage means M for temporary storage. Such a storage means can comprise one or more memory devices, being physically distributed or not. In some embodiments the first interface can comprise some limited storage capabilities such that raw sensor data can immediately retrieved from the first interface, other embodiments comprise a separate storage means, and others a combination of both. Depending on the applications' needs, the simplest form of the gesture service platform, allows the applications to access these raw sensor data from this storage means via their interface and via the second interface of the gesture service platform. Such an embodiment implies that the applications further process the raw sensor data. In other embodiments of the gesture service platform however, the latter further includes a processing means to further process these raw data. This processing may consist of analyzing, possibly including recognition and/or combination of gestures from the raw sensor data, for thereby generating high level abstraction data. In Fig. 1 the processing means is denoted P, which will receive the raw sensor data from the storage means M, and generate from them high level movement abstraction data. In the example depicted in Fig. 1 raw sensor data d1 and d2 are provided to A, and the high level abstraction data generated from them is denoted h1. In some embodiments the processing means P will contain pre-stored analysis programs, to generate some of these high level movement abstraction data, understandable by most of the applications, from specific captured raw data. In other embodiments the processing means can perform some specific processing, on demand of some applications themselves, whereby the instructions for the processing are also provided these applications. This may be the case for some application-proprietary algorithms, which the applications do not want to share. Other embodiments may use a combination of both principles, thus containing standard analysis algorithms, as well as a provision for receiving and executing proprietary analysis algorithms. Standard analysis can be done on request by specific applications, or be executed by default, immediately after capture of the relevant input data for these standard analysis algorithms. The generated high level movement abstraction data can also be stored and/or immediately be provided to the requesting applications.

In Fig. 1 the high level abstraction data out of d1 and d2 is denoted h1, and this is first provided back to the storage means M, before provision to application A1. In general the high level movement abstraction data , denoted h1,...,hp and/or the raw sensor data d1,d2,...,dn can be delivered to any of the applications either directly or upon request of these applications. Depending on the type of data and applications a combination of both procedures can also take place.

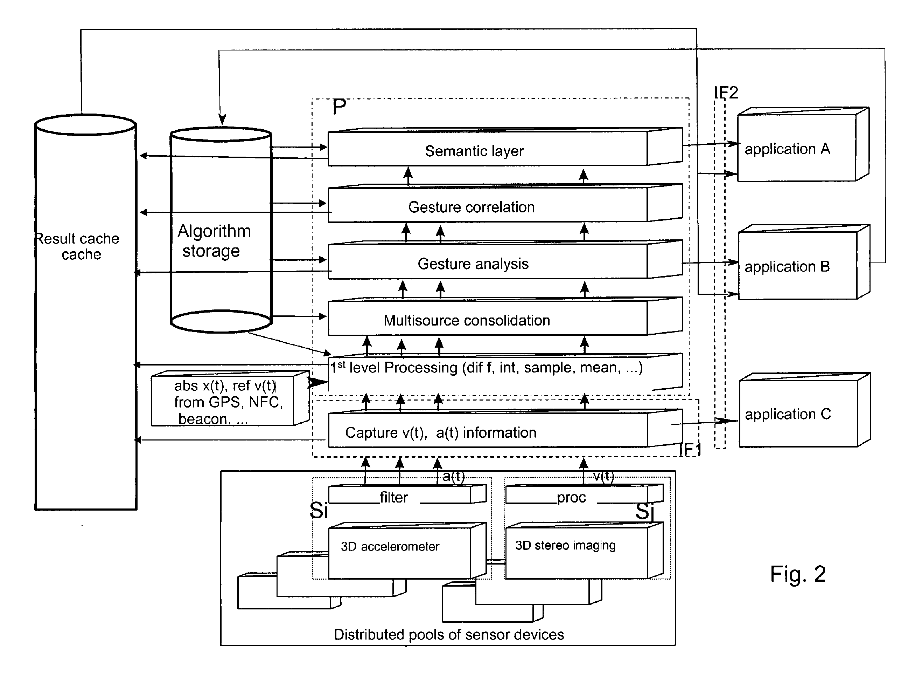

Fig. 2 shows a more detailed implementation of a gesture service platform. This platform may be used for handling car-related motion information. The motion sensor devices Si and Sj in this embodiment comprise a set of 3dimensional accelerometers as well as a distributed set of 3dimensional stereo imaging systems. The data provided by the accelerometers may be optionally filtered before being sent to the gesture server, and the data provided to the gesture service platform is denoted a(t) and comprises acceleration and/or slowing down data. The 3D stereo imaging systems can be equipped with internal processing tools such as to provide motion data e.g. of a driver during a sudden brake event. The data provided by the 3D stereo imaging sensors are denoted v(t). These data are stored on a storage means, in Fig. 2 denoted as Cache , which may comprise a memory implemented by some semiconductor RAM or ROM or flash-type memory on one or more computers, memory on hard disks, or any type of data storage means as is well known by a person skilled in the art.

The sensor data can be continuously captured, or at certain time intervals, according to the policies imposed by the applications making use of the data of the respective sensors. The block in Fig. 2 denoted by "capture v(t), a(t) information" corresponds to the first interface of Fig. 1. Some applications make direct use of the captured data, such as application C in Fig. 2. These data are then directly provided via the second interface IF2 to that application. Other applications require the raw data to be further processed by processing means P. For this processing it may be necessary to import data from additional sources that complement the recorded motion data, such as absolute coordinates which may come from e.g. GPS systems, or reference velocities which can be provided by Near Field Communication beacons or other means.

In the embodiment of Fig. 2 these additional data are provided to the processing block P; other embodiments requiring these additional data can also obtain them via the capture block.

The kind of data manipulation or processing needed can be preprogrammed, or can depend on the applications using these data. In some embodiments, as the one depicted in Fig. 2 an algorithm storage means may be provided where the gesture service platform can store standard algorithms and where the applications can also add their custom algorithms if needed. This is for instance the case for application B in the example depicted in Fig. 2. Again several implementations of such an algorithm storage means are possible as was already discussed for the data cache storage means. In some embodiments the algorithm storage means can be realized as part of the same physical memory device as the cache memory, in other embodiments these may be two separate devices. In some other embodiments this algorithm storage means can also be part of the processing means P itself.

These algorithms are used by the processing means P, in the embodiment of Fig. 2 comprising several sub-blocks. A first sub-block is denoted first level processing, which may be used for filtering out erratic data, for calculating derivatives, mean values, integration, further sampling of data. However, in general the instructions for processing also contain further information for further processing of the results of this first order processing. For example in a next step, data of several data sources can be combined and consolidated. This may be done e.g. when one needs to known the movement of a hand and not of the individual fingers. This consolidation can also be done over data sources that are distributed over large distances e.g. traffic congestion detection by combining the movements of many cars on a road. The functional block adapted to perform this is denoted multisource consolidation in fig. 2.

After this consolidation step, gestures can be extracted. This is performed by the gesture analysis block in the embodiment of Fig. 2. Result of this step may be "driver's head moving upwards, downwards, left, right" etc. A next step involves gesture correlation. An example of this may be correlating the gestures of the hands when a hearing impaired person talks in sign language, to a translation into normal spoken language.

In a final step, denoted by "semantic layer" some more high-level movements can be are extracted. For example "waving with a hand" can be the result of a combination of holding the arm up and moving several times from left to right and from right to left. For the example of the car driver this may be the detection of a whiplash as a result of a violent car deceleration - acceleration cycle measured by the accelerometers and large movements of the head by the imaging system that can be correlated to this deceleration - acceleration cycle.

In the embodiment of Fig. 2 these steps are thus depicted as individual blocks, but on some embodiments they can all be performed by one single processer. The output of this processing step is the generation and provision of some high level macros.

In general the processing instructions stored on the algorithm storage means order the different processing levels of the gesture data and use a workflow mechanism to schedule the processing order.

As was clear from the previous example, processing of the raw sensor data as performed by this embodiment of the gesture service platform is thus more than matching "images" against a dictionary of images. For this kind of embodiment the processing means of the gesture server will internally use a point-of-interest abstraction e.g. abstraction from the (MEMS) sensor itself, abstraction from a tracked optical motion marker, but use e.g. the concept of a hand synthesized from markers on the fingers, .... So the processing means will further use the movement of these points-of-interest. A gesture can thus be defined as a time-delineated subset of trajectories of multiple points-of-interest moving in time (e.g. absolute motion of center of mass in an external reference system + relative motion of PointOflnterest object w.r.t. its center of mass). The trajectories could be represented by "parameters", observing the position, speed, acceleration, frequency, phase variation in 3 dimensions over time, and the correlations of these physical quantities. Periods of low parameter variation could be used to delineate the gestures.

In the present example the algorithms typically may further entail a learning aspect: a set of movements of points-of-interest is recorded, and by statistical means, a sensitivity analysis on the parameters is performed: parameters with not enough variation between the learning movements are ignored, and a subset of parameters is selected that have the best discriminative power. In the learning phase, some derived variables of the parameters can be marked as "gesture variables": these cannot be used themselves to discriminate movements, but carry special information to the application. An example may be the direction in space of a pointing gesture, which can be used to "select" an external object. An example of this can be a pointing finger movement of the driver to the light activation button, upon which detection the headlights will be switched on.

After the learning phase, the delineated gestures are analysed against the discriminative parameters, and a statistical decision is made to map observed gestures on learned movements. An example of this can be an analysis of the position of fingers with respect to each other, to enable recognition of a "pointing gesture" .

The result of the detection process is a "virtual event" e.g. the detection of the pointing gesture towards the light switch of the car, which detection may be stored or be sent directly to the application, which will then activate the switching on of the lights. The virtual aspect thus allows an application to be developed while making abstraction of the motion input devices that are available: pressing a key, clicking on a Graphical User linterface button, or waving with your hand could all trigger the same "virtual event", with the same consequence for the application.

For performance reasons the gesture server may also contain an intermediate result cache for storing the processing results for application retrieval. This result cache can in some embodiments be the same or shared with the raw data cache, as is the case of the embodiment of Fig. 2.

In order to deal with multiple applications, the gesture server may also perform a function that could be described as "focus control": the gesture server can then independently decide to which (single or multiple) applications the currently active gesture pattern are to be sent as a "virtual input event", instead of individual retrieval of the relevant data by the applications themselves. This focus control could be based on external information by a user driven application, on application context, or on internal state of the gesture server ("gesture variable") Such a gesture variable may given an indication of a certain internal state or may trigger a certain action to be performed. Referring to a previous example such a gesture variable may indicate whether or not to translate the gestures of a hand of a hearing impaired person to be translated into spoken language.

In general an application wanting to use the gesture server is first to select the needed data. This can be done by querying the storage means, and, if necessary, by uploading some data filters in case the application required some further filtering processing. In a next step some further appropriate algorithms, if available, need to be selected, and possibly some custom algorithms need to be uploaded to the algorithm store.

There are several ways an application can interact with the gesture server. The application can just query or retrieve the processed or raw sensor data. Alternatively the application can query for gestures or more high-level movements and/or the application can subscribe to some gestures and get notified when such a gesture is detected. In the example of Fig. 2 this may be the case for these applications which might only be interested in e.g. a movement of the head of the driver with an angle larger than 70º from the vertical direction. In that case the gesture server will only notify this specific application in case such an event takes place.

The gesture server allows sharing the same data with several applications at the same time. Each application can use this data with the abstraction and consolidation level it needs. For example, the same movement sensors in a car can be used to evaluate the road condition, aid in navigation where GPS is unreliable, traffic congestion detection (when combined with the sensors in other cars), etc. all at the same time. The applications interface with the gesture server via a specific interface, one in the applications and another one in the gesture service platform, so do not need to know or take into account that the same sensor data is used in other applications.

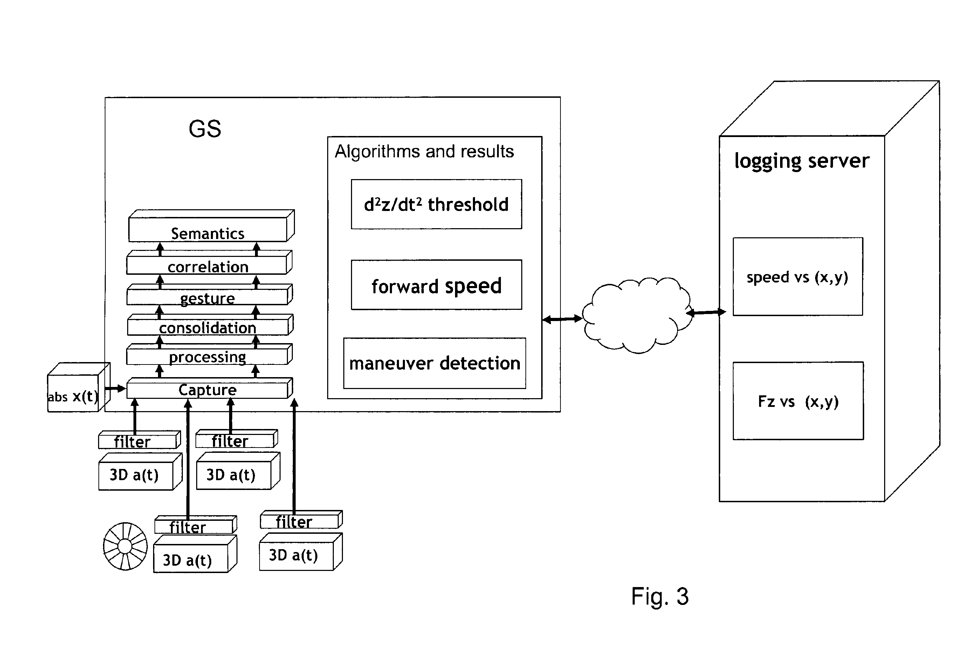

An example of such applications, using data collected and processed by the gesture server of Fig. 2, are shown in Fig. 3.

In this figure a possible implementation is given for the case where existing sensors such as accelerometers in the wheels of a car are sending their data towards a gesture service platform similar to that of fig. 2. From the raw sensor data, the processing means may calculate the actual speed of a car, the vertical forces acting on the wheels and detect if the car is turning or driving a straight section. These algorithms may be built-in in the gesture server, or provided by some specific applications to the processing means. The calculated vertical force values can be further filtered out to compensate for normal road irregularities. All 3 data sets can be sent to applications comprising a logging server for correlating these 3 sets of information with a road map. These applications can further extract the road condition and observed speed limit on each road section. Applications such as the car navigation system can use the car movements to supplement the GPS position. The responsible for the road infrastructure can monitor on-line the quality of the roads. The recorded speeds on road sections can be used for checking the speed limits and be also used in car navigations systems for estimating travel times. Traffic densities can also be determined by combining data from different cars with each other.

The gesture server provides a framework that allows these applications to share the same data and gesture information without exposing the implementation details of and without interfering with each other.

The benefit of the invention is the offering of an independent service that can consume raw sensor data and transform it into movement information independent of the sensor technology used and the possible application domain. It allows the sharing of data and gesture information between independent applications. The invention can be used in all applications where interfacing with gestures provides added value. The gaming and wellness industry, for example, are such domains and represent a large and still growing business. In general there is a trend towards more interactivity and co-operation between the users and devices. Many devices become equipped with motion sensors due to the size and cost reduction. This trend is especially visible in gaming. The invention will allow to expand this interactivity and co-operation with devices into new domains (i.e. sports training, rehabilitation, physical impairment assistance, ...) . The advantages are:
- Motion aware hardware devices are not tied to a single software vendor platform
- The application developer of motion aware applications does not need to know the details of the hardware used, indeed, swapping the motion sensor hardware by alternatives also supported by the motion server would come at zero cost.
- The application developer can work with high-level motion primitives in his applications and substantially reduce development times
- The applications can use additional information by combining gestures or data of many motion aware devices.
- The motion devices can be used in multiple applications active at the same time
- A single application can use input from multiple motion sensors at the same time
- The consumer does not need to buy new equipment with each new motion aware application.

While the principles of the invention have been described above in connection with specific apparatus, it is to be clearly understood that this description is made only by way of example and not as a limitation on the scope of the invention, as defined in the appended claims.

## Claims

1. Gesture service platform being coupled to a plurality of motion sensor device (S1,S2,..,Sn), and being adapted to receive raw sensor data (d1,d2,...,dn) from any of said motion sensor devices (S1,S2,...,Sn), to store said raw sensor data (d1,d2,...,dn) and to provide any of said raw sensor data to any of a plurality of applications (A1,A2,...,Am) coupled to said gesture service platform.

2. Gesture service platform according to claim 1 further being adapted to process said raw sensor data (d1,d2,...,dn), such as to generate high level movement abstraction data (h1,...,hp) understandable by at least one of said applications (A1,A2,...,Am) for further storage on said gesture service platform.

3. Gesture service platform according to claim 2 further being adapted to process said raw sensor data upon request of said at least one application.

4. Gesture service platform according to claim 3 further being adapted to receive instructions related to said processing of said raw sensor data from said at least one application, and to provide said high level movement abstraction data back to said at least one application.

5. Gesture service platform according to any of the previous claims 1 to 4 being further adapted to provide said high level movement abstraction data (h1,...,hp) and/or said raw sensor data (d1,d2,...,dn) to any of said applications upon request of said applications.

6. Gesture service platform according to any of the previous claims 1 to 5 being coupled to at least one motion sensor device of said first plurality via a first communication network.

7. Gesture service platform according to any of the previous claims 1 to 6 being coupled to at least one application of said second plurality of applications via a second communication network.

8. Gesture service platform according to claim 1, comprising
a) a first interface (IF1) to a plurality of motion sensor device (S1,S2,..,Sn), for receiving said raw sensor data (d1,d2,...,dn) from any of said motion sensor devices (S1,S2,...,Sn),
b) a storage means (M) for storing said raw sensor data (d1,d2,...,dn)
c) a second interface (IF2) to said plurality of applications (A1,A2,...,Am) for providing said raw sensor data to any of said plurality of applications (A1,A2,...,Am).

9. Gesture service platform according to claim 8, further including a processing means for processing said raw sensor data (d1,d2,...,dn), such as to generate said high level movement abstraction data (h1,...,hp) understandable by at least one of said applications (A1,A2,...,Am) for further storage in said storage means of said gesture service platform.

10. Application (A1) for cooperating with a gesture service platform in accordance with any of the claims 1 to 9 including an application interface (AIF1) for communication with said gesture service platform for receiving any of said raw sensor data or at least one of said high level movement abstraction data from said gesture service platform.

11. Application (A1) according to claim 8 and claim 10 wherein said interface (AIF1) is adapted to communicate with said second interface (IF2) of said gesture service platform.

12. Application (A1) according to claim 10 or 11, being further adapted to provide instructions related to said processing of said raw sensor data to said gesture service platform.

13. Method for providing a gesture service to a plurality of applications, said method including the steps of provision of a gesture service platform coupled to any of said applications and to any of a plurality of motion sensor devices in accordance with any of the previous claims 1 to 9 and wherein said applications are adapted in accordance with any of the previous claims 10 to 12.
